# EUROPEAN PATENT APPLICATION

(11) **EP 4 717 966 A1**
(43) Date of publication of application: **01.04.2026**
(21) Application number: 24203738.0
(22) Date of filing: 30.09.2024
(51) Int. Cl.: F16L 51/02, F16L 51/03

(54) **EXPANSION DEVICE FOR A PIPELINE**

(71) Applicant: TJÆREBORG KOMPENSATORFABRIK A/S, 6731 Tjæreborg (DK)
(72) Inventor: THOMSEN, Jimmi, Tjæreborg (DK)
(74) Representative: Aera A/S

(57) **Abstract**

An expansion device 10 for a pipeline is disclosed. The expansion device 10 comprises a first pipe portion with a corrugated bellow structure 3 having a plurality of ridges including a first ridge and a plurality of grooves including a first groove. The expansion device 10 comprises an internal passage IP in a longitudinal direction of the expansion device 10, where an inner surface of the plurality of ridges is on an inside of the expansion device 10 and an inner surface of the plurality of grooves is on an outside of the expansion device. A ratio between a width (W_R,1) of the first ridge and a width (W_G,1) of the first groove is at least 1.1.

## Description

The present disclosure pertains to the field of expansion devices for pipelines, methods of manufacturing expansion devices, and stabilisations devices for expansion devices.

### BACKGROUND

Pipelines, such as piping systems, have always struggled with keeping their pipelines clean from impurities and sediments. Especially the food and pharmaceutical industries have always struggled to keep their piping systems as free from bacteria and impurities as possible. In that regard, a weak point in piping systems lies in expansion devices, such as compensators, where the current solutions have significant weaknesses, such as taking up too much space, not being cleanable enough, low durability, and high maintenance costs.

### SUMMARY

An expansion device, such as a compensator, is a component in a piping system configured to absorb, compensate for, or counteract thermal movements, vibrations, pressure changes, or deformations that may occur within the system. Expansion devices are therefore configured to protect pipelines, equipment, and connected components from damage caused by thermal expansion and contraction, vibrations, or other mechanical stresses.

One of the principles of an expansion device's design lies in the spring-like effect achieved by shaping the pipe walls into convolutions or bulbs. These convolutions or bulbs create pockets, such as cylindrical pockets, that can trap residues of the medium flowing through the expansion device, which in turn creates the potential for impurities, such as accumulation of impurities, in the piping system.

During regular operation, a piping system is cleaned periodically by flushing with water or another cleaning fluid. However, in the current bellow designs, flushing does not provide sufficient cleanliness, as the cleaning fluid cannot effectively clear the pockets of trapped residues. Therefore, current expansion devices have to be unmounted from the pipeline system and cleaned manually.

Another widely used solution is the incorporation of a lyre in the piping system. However, this approach requires significant physical space, which presents challenges for many production systems.

Accordingly, there is a need for expansion devices and methods of manufacturing expansion devices, which may mitigate, alleviate, or address the shortcomings existing and may provide improved expansion devices with improved cleaning capabilities, durability, compactness, and/or lower maintenance costs.

An expansion device for a pipeline is disclosed. The expansion device comprises a first pipe portion with a corrugated bellow structure having a plurality of ridges including a first ridge and a plurality of grooves including a first groove. The expansion device comprises an internal passage in a longitudinal direction of the expansion device, where an inner surface of the plurality of ridges is on an inside of the expansion device and an inner surface of the plurality of grooves is on an outside of the expansion device. A ratio between a width (W_R,1) of the first ridge and a width (W_G,1) of the first groove is at least 1.1 and/or a ratio between the width (W_R,1) and a depth (D_R,1) of the first ridge is in the range of 0.5 to 1.2.

The first ridge has a first crest section comprising a first crest where the first crest section has a rounded shape, such as a substantially rounded shape.

It is an advantage of the present disclosure to provide an expansion device with improved cleaning capabilities, such as improved self-cleaning capabilities. For example, the present expansion device avoids or reduces build up, such as accumulation, of sediments and/or impurities in the first ridge, such as in the plurality of ridges, of the expansion device. Furthermore, the present expansion device improves the maintenance and cleaning of the expansion device by allowing cleaning product to enter the entire first ridge of the expansion device instead of only part of a ridge in current expansion devices. It may be appreciated that the present expansion device allows the medium flowing in the expansion device, such as in the internal passage, to enter the first ridge, such as the plurality of ridges, and create a turbulence and/or circular flow in the first ridge which in turn allows self-cleaning of the first ridge, such as self-cleaning of the expansion device. The present expansion device provides improved cleaning properties while having an improved durability as expansion device and while having a compact structure.

A method of manufacturing an expansion device is disclosed. The method comprises providing one or more sheets of suitable material. The method comprises performing a bellow forming operation of the one or more sheets using a first secondary inside matrix and a second secondary outside matrix, where a ratio of a diameter between the first secondary inside matrix and a radius of the second secondary outside matrix is at least 1.1.

It is an advantage of the present disclosure to provide a method of manufacturing an expansion device with improved cleaning capabilities, such as improved self-cleaning capabilities. For example, the method provides expansion device having properties to avoid or reduce build up, such as accumulation, of sediments and/or impurities in the ridges of the expansion device. The present method provides expansion devices with improved maintenance and cleaning of the expansion device by allowing cleaning product to enter the entire first ridge of the expansion device instead of only part of a ridge in current expansion devices. It may be appreciated that the present method provides expansion devices allowing the medium flowing in the expansion device, such as in the internal passage, to enter the first ridge, such as the plurality of ridges, and create a turbulence in the first ridge which in turn allows self-cleaning of the first ridge, such as self-cleaning of the expansion device. The present method provides expansion devices with improved cleaning properties while having an improved durability as expansion device and while having a compact structure. The present method, such as the bellow forming operation of the present method, allows to obtain an expansion device with ridges having crest sections having a rounded shape. An advantage of the present method is the provision of an expansion device where a distance between the bellows is smaller than in current expansion devices, such as the width of a ridge is larger than the width of a groove.

A stabilisation device for an expansion device is disclosed. The stabilisation device has a substantially rectangular cross section and is configured to be arranged at an intermediate portion of the expansion device, or the stabilisation device has a plurality of interconnected protrusions where each protrusion is configured to be arranged in a groove of the expansion device.

An advantage of the present stabilisation device is that it stabilizes an expansion device and increases the expansion device's durability and lifetime.

A method of retrofitting a stabilisation device according to the present disclosure to an expansion device is disclosed. The method comprises arranging the stabilisation device in at least one groove of the expansion device.

A kit of parts is disclosed. The kit comprises an expansion device according to the present disclosure and a stabilisation device according to the present disclosure.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1A schematically illustrates an example of an expansion device,
Fig. 1B schematically illustrates an example cross-section view of an example expansion device according to the present disclosure,
Fig. 2 schematically illustrates an example zoomed-in cross-section view of an example expansion device according to the present disclosure,
Fig. 3 schematically illustrates an example cross-section view of an example expansion device according to the present disclosure,
Fig. 4A schematically illustrates an example cross-section view of an example expansion device according to the present disclosure comprising a first embodiment of a stabilisation device according to the present disclosure,
Fig. 4B schematically illustrates an example cross-section view of an example expansion device according to the present disclosure without a stabilisation device,
Fig. 5 schematically illustrates an example cross-section view of an example expansion device according to the present disclosure comprising a second embodiment of a stabilisation device according to the present disclosure,
Fig. 6 schematically illustrates an example cross-section view of an example expansion device according to the present disclosure,
Fig. 7 show a flow diagram of an example method of manufacturing an expansion device according to the present disclosure,
Fig. 8 schematically illustrates an example cross-section view where a technique as disclosed herein is applied, and
Fig. 9 schematically illustrates an example side view and an example cross-section view of an example stabilisation device according to the present disclosure.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The figures are schematic and simplified for clarity, and they merely show details which aid understanding the disclosure, while other details have been left out. Throughout, the same reference numerals are used for identical or corresponding parts.

An expansion device, such as a compensator, is a component in a piping system configured to absorb, compensate for, or counteract thermal movements, vibrations, pressure changes, or deformations that may occur within the system. Expansion devices are therefore configured to protect pipelines, equipment, and connected components from damage caused by thermal expansion and contraction, vibrations, or other mechanical stresses.

One of the principles of an expansion device's design lies in the spring-like effect achieved by shaping the pipe walls into waves. These waves create pockets, such as cylindrical pockets, that can trap residues of the medium flowing through the expansion device, which in turn creates the potential for impurities, such as accumulation of impurities, in the piping system.

During regular operation, a piping system is cleaned periodically by flushing with water or another cleaning fluid. However, in the current bellow designs, flushing does not provide sufficient cleanliness, as the cleaning fluid cannot effectively clear the pockets of trapped residues. Therefore, current expansion devices have to be unmounted from the pipeline system and cleaned manually.

Another widely used solution is the incorporation of a lyre in the piping system. However, this approach requires significant physical space, which presents challenges for many production systems.

Accordingly, there is a need for expansion devices and methods of manufacturing expansion devices, which may mitigate, alleviate, or address the shortcomings existing and may provide improved expansion devices with improved cleaning capabilities, durability, compactness, and/or lower maintenance costs.

An expansion device for a pipeline is disclosed. An expansion device may be seen as a compensator for pipeline, such as a pipeline system. In other words, an expansion device may be configured to compensate for movements in a pipeline or pipeline system. For example, an expansion device may be configured to compensate for axial, relative rotational, and/or lateral movements in a pipeline. It may be appreciated that the expansion device may be advantageously used in the food and/or pharmaceutical field, such as in pipelines and pipeline systems configured to be used for food and/or pharmaceutical medium where it may be important to have reduced or no sediments and impurities getting stuck and/or accumulating in the ridges of the expansion device, e.g., for sanitary purposes.

The expansion device comprises a first pipe portion with a corrugated bellow structure having a plurality of ridges including a first ridge and a plurality of grooves including a first groove. In one or more example embodiments, the expansion device may comprise a number N of ridges and a number N-1 of grooves. In one or more example embodiments, the expansion device may comprise a number N of grooves and a number N-1 of grooves. However, it may be preferable to have a number N of ridges and a number N-1 of grooves for having a better flow inside the ridges, such as a better turbulence in the ridges. The corrugated bellow structure may be seen as comprising the plurality of ridges and the plurality of grooves forming the corrugated below structure. The first pipe portion may be seen as a corrugated pipe having a bellow structure with a plurality of bulbs. In the present disclosure, a ridge may be seen as a bulb. The expansion device may be seen as a bellow-type compensator. In one or more example embodiments, the first pipe portion comprises a second ridge, a third ridge, a fourth ridge etc. and a second groove, a third groove, a fourth groove etc. It may be appreciated that each ridge has a least one neighbouring groove. The first ridge and/or the last ridge of the first pipe portion may only have one neighbouring groove while the remaining ridges may have two neighbouring grooves (e.g., on each side of the ridge).

The expansion device comprises an internal passage in a longitudinal direction of the expansion device. The internal passage may be configured to allow a medium flowing in the pipeline to flow through the expansion device. The expansion device may have a substantially circular cross section in a direction perpendicular to the longitudinal direction. The longitudinal direction may be seen as a direction being along a length of the expansion device, such as the direction in which the expansion device has its longest dimension. It may be appreciated that in use of the expansion device the medium may flow along the longitudinal direction in the internal passage of the expansion device.

An inner surface of the plurality of ridges is on an inside of the expansion device and an inner surface of the plurality of grooves is on an outside of the expansion device. In other words, the inner surface of the plurality of ridges may be seen as on an inside of the expansion device, such as facing the internal passage of the expansion device. The inner surface of the grooves may be seen as on an outside of the expansion device, such as facing away from the internal passage. In other words, in use of the expansion device the inner surface of the plurality of ridges may be in contact with the medium flowing in the internal passage, while the inner surface of the plurality of grooves may not be in contact with the medium.

A ratio between a width W_R,1 of the first ridge and a width W_G,1 of the first groove is at least 1.1. In one or more example embodiments, the ratio between the width W_R,1 of the first ridge and the width W_G,1 of the first groove is at least 1.2, at least 1.3, at least 1.4, at least 1.5, at least 2, at least 2.5, or at least 3, for example 4. It may be appreciated that the ratio between the width W_R,1 of the first ridge and the width W_G,1 of the first groove may depend on the size of the expansion device. In other words, the first ridge may be seen as wider than the first groove. In one or more example embodiments, the expansion device, such as the first pipe portion, comprises at least three ridges and two grooves, at least four ridges and three grooves, at least five ridges and three grooves, at least six ridges and five grooves, at least six ridges and five grooves, at least seven ridges and six grooves, at least eight ridges and seven grooves, and/or at least nine ridges and eight grooves having a width ratio of at least 1.1, such as having the same width ratio as between the first ridge and the first groove. For example, for each of the three ridges, a ratio between a ridge and a groove may be at least 1.1. In one or more example embodiments, all of or substantially all of the ridges and grooves of the first pipe portion may have a ridge/groove width ratio of at least 1.1. In other words, all of or substantially all of the ridges and grooves of the first pipe portion may have the same width ratio as between the first ridge and the first groove, e.g., at least 1.1. For example, the first pipe portion may comprise a second ridge, a third ridge, a fourth ridge, a fifth ridge, a sixth ridge, a seventh ridge, an eight ridge, and/or a ninth ridge, and correspondingly a second groove, a third groove, a fourth groove, a third groove, a fourth groove, a fifth groove, a sixth groove, a seventh groove, and/or an eight groove, where each groove and ridge may have the same width ratio as between the first ridge and the first groove, e.g., at least 1.1.

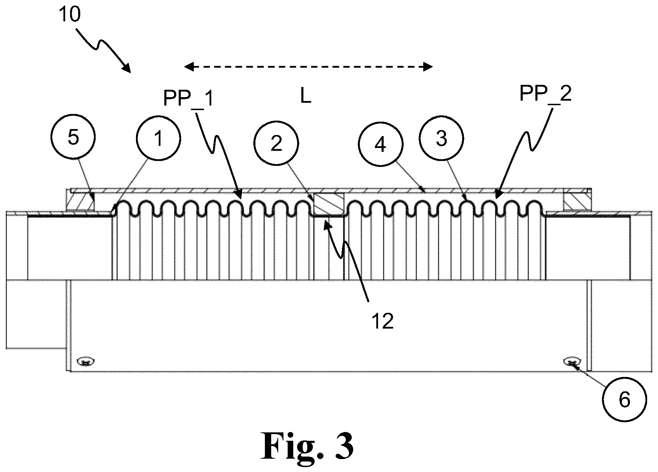

The width W_R,1 of the first ridge may be measured at a widest point of the first ridge as shown in Fig. 3. The width W_G,1 of the first groove may be measured at a widest point of the first groove as shown in Fig. 3. The width W_R,1 of the first ridge may be measured at a widest point between a first side section and a second side section as disclosed herein.

An advantage of having the first ridge wider than the first groove may be to allow the medium flowing in the expansion device, such as in the internal passage, to enter the first ridge, such as the plurality of ridges, and create a turbulence in the first ridge which in turn allows self-cleaning of the first ridge, such as self-cleaning of the expansion device.

Furthermore, when the first ridge is wider than the first groove, such as when the plurality of ridges is wider than the plurality of grooves, the distance between ridges is reduced which improves the flow of medium entering the ridges and in turn the self-cleaning properties and the turbulence flow in the ridges. In other words, when the first ridge is wider than the first groove the distance between the bulbs/bellows of the expansion device may be reduced compared to expansion devices where ridges and grooves have the same width.

The first ridge has a first crest section comprising a first crest where the first crest section has a rounded shape, such as a substantially rounded shape. The first crest section may be seen as the section of the first ridge which is curving on each side of the crest. The crest may be seen as a top point of the first ridge. The first crest section may be seen as having an arched, oval, and/or semi-circular cross section in a direction perpendicular to the longitudinal direction. In one or more example embodiments, each of the plurality of ridges of the first pipe portion has a crest section comprising a crest where the crest section has a rounded shape.

It may be appreciated that the dimensions specified for the expansion device 10, such as the width W_R,1 of the first ridge, the width W_G,1 of the first groove, the depth D_R,1 of the first ridge etc. may be dimensions in a static state of the expansion device, such as a state where the expansion device is not in operation and/or not subjected to forces from pipeline.

In one or more example embodiments, a ratio between the width W_R,1 and a depth D_R,1 of the first ridge is in the range of 0.5 to 1.2. A ratio between the width W_R,1 and a depth D_R,1 of the first ridge is in the range of 0.5 to 1.2 provides ridges having a reduced depth but a wider width compared to ridges in current expansion devices which are narrower and more elongated, e.g., having a width to depth ratio <0.5. Reducing the depth of the ridges and/or increasing the width of the ridges may allow the medium flowing in the expansion device, such as in the internal passage, to enter the first ridge, such as the plurality of ridges, and create a turbulence in the first ridge which in turn allows self-cleaning of the first ridge, such as self-cleaning of the expansion device. For example, the medium may enter the entire ridge instead of only part of a ridge as it is the case in current expansion devices.

In one or more example embodiments, the first groove has a first trough section comprising a first trough where the first trough section has a rounded shape. The first trough section may be seen as the section of the first groove which is curving on each side of the trough. The trough may be seen as a top point of the first groove. The first trough section may be seen as having an arched, oval, and/or semi-circular cross section in a direction perpendicular to the longitudinal direction. In one or more example embodiments, each of the plurality of grooves of the first pipe portion has a trough section comprising a trough where the trough section has a rounded shape.

In one or more example embodiments, a ratio between a radius of curvature of the first crest section and a radius of curvature of the first trough section is at least 1.1. In one or more example embodiments, the ratio between the radius of curvature of the first crest section and the radius of curvature of the first trough section is at least 1.2, at least 1.3, at least 1.4, at least 1.5, at least 2, at least 2.5, or at least 3, for example 4. In other words, the ratio between the radius of curvature of the first crest section and the radius of curvature of the first trough section may be in the range of 1.1 to 4, such as 1.4 to 4, e.g., 1.4 to 3.

In one or more example embodiments, the first ridge has a first side section and a second side section where the first crest section interconnects the first side section and the second side section. In one or more example embodiments, the first side section and/or the second side section form an angle with the longitudinal direction in the range of 75° to 105°, such as in the range of 85° to 95°. The first side section and the second side section may be seen as side walls of the first ridge. In other words, the first ridge may be seen as having substantially straight walls, such as substantially perpendicular walls. The first side section may be seen as the section between the first crest section and the previous neighbouring groove's trough section. The second side section may be seen as the section between the first crest section and the next neighbouring groove's trough section, such as the first trough section. It may be appreciated that the first side section and the second side section of the first ridge may be seen as side sections of the previous neighbouring groove and/or the next neighbouring groove.

In one or more example embodiments, a ratio between an inside diameter of the expansion device and the depth D_R,1 of the first ridge is in the range of 5 to 12. In one or more example embodiments, a ratio between an inside diameter of the expansion device and the depth D_R,1 of the first ridge is in the range of 6 to 11, such as in the range of 7 to 10. It may be appreciated that the depth of the first ridge, such as the depth of the ridges of the expansion device, may be proportional with the inside diameter of the expansion device.

In one or more example embodiments, the expansion device comprises a second pipe portion with a corrugated bellow structure having a plurality of ridges and a plurality of grooves. In one or more example embodiments, the second pipe portion is similar or identical to the first pipe portion. For example, the expansion device may be symmetrical around an intermediate portion where the first pipe portion and second pipe portion are substantially identical on each side of the intermediate portion. In one or more example embodiments, the second pipe portion is different from the first pipe portion, e.g., having a different number of ridges and grooves, such as having a different number of bulbs or bellows. In other words, in some embodiments the expansion device may not be symmetrical around the intermediate portion.

In one or more example embodiments, the expansion device comprising an intermediate portion between the first pipe portion and the second pipe portion. In other words, the first pipe portion and the second pipe portion may be separated by the intermediate portion. The intermediate portion may be seen as a pipe portion without corrugated bellow structure. It may be appreciated that the intermediate portion may increase the lifetime of the expansion device by separating the first pipe portion and the second pipe portion and thereby reducing the number of bulbs and/or bellows per pipe portion. Further, the intermediate portion may provide an increased structural rigidity in a centre region of the expansion device, such as strengthening the expansion device by making it stiffer around the centre region. The first pipe portion and the second pipe portion may be formed from a common pipe portion. The intermediate portion may be formed by refraining from forming bulbs and/or bellow structure at the intermediate portion, such as refraining from performing a bellow forming operation and/or a punching operation at the intermediate portion. In one or more example embodiments, the intermediate portion may be seen as a groove between the first pipe portion and the second pipe portion, such as a groove between the last ridge of the first pipe portion and the first ridges of the second pipe portion. The intermediate portion may be seen as a separation portion between the first pipe portion and the second pipe portion, such as a separation portion along an outer surface of the expansion device surrounding the expansion device.

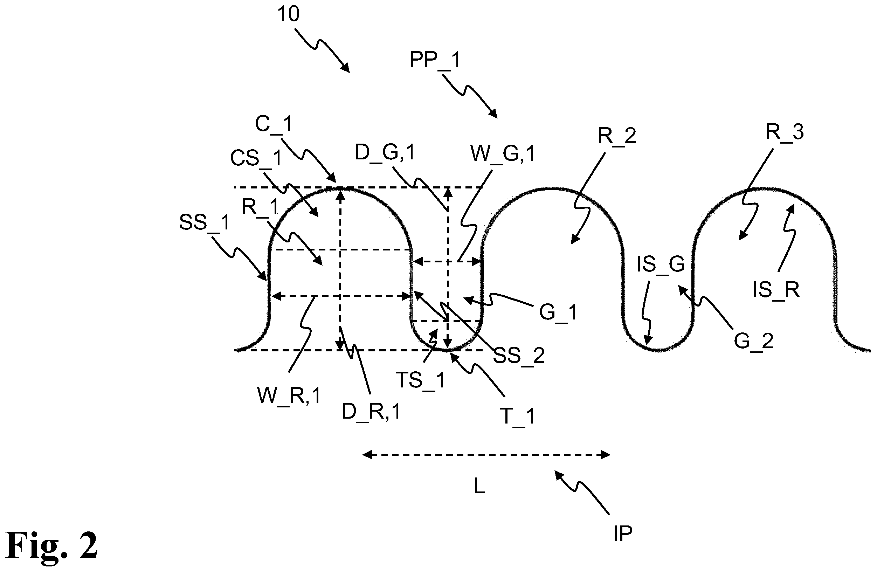

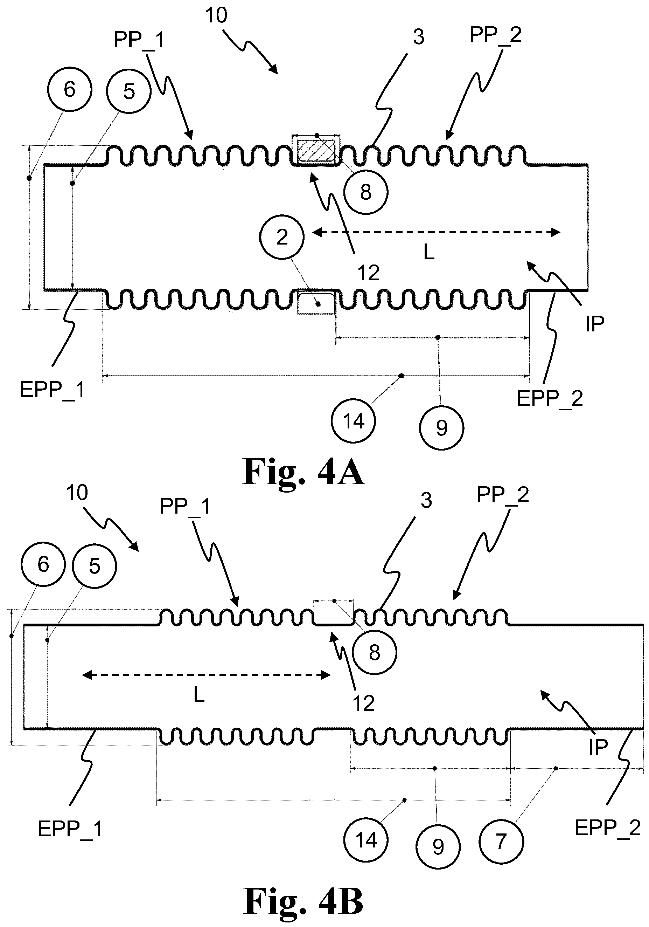

In one or more example embodiments, the intermediate portion has a cylindrical cross section along the longitudinal direction. In other words, the intermediate portion may be seen as having a circular cross section in a direction perpendicular to the longitudinal axis. Seen from a cross section along a longitudinal direction as shown in Fig. 2 and Figs. 4A-4B, the intermediate portion has a straight portion between the first pipe portion and the second pipe portion. For example, seen from this cross section the intermediate portion may be seen as a groove having a flat or plane bottom portion or section.

In one or more example embodiments, the expansion device comprises a stabilisation device arranged in at least one groove of the plurality of grooves. In one or more example embodiments, the stabilisation device may be arranged in at least two grooves of the plurality of grooves. The stabilisation device may be seen as a device for stabilizing the expansion device, such as for increasing a stability of the expansion device and improving a durability or lifetime of the expansion device. It may be appreciated that having a ratio between a width W_R,1 of the first ridge and a width W_G,1 of the first groove of at least 1.1 may decrease a bulb or bellow stability of the expansion device. Therefore, in order to compensate for this instability due to the different width between the first ridge and the first groove and/or to increase the durability or lifetime of the expansion device, a stabilisation device may be arranged in at least one groove of the plurality of grooves. It should be noted that the expansion device may work without the stabilisation device even with an introduced instability from the difference of width between the first ridge and the first groove. The stabilisation device may provide an increased rigidity in the region where the stabilisation device is arranged and may compensate for the forces and/or pressure that the expansion device and the bellows may be subject to under operation of the expansion device. The stabilisation device may avoid that the bellow structure collapses, such as one or more ridges and/or grooves collapsing, due to large forces and/or pressure on the expansion device. The stabilisation device may be configured to stabilize the expansion device when the expansion device is subject to forces and is compressed and/or moving. The stabilisation device may be made of polyoxymethylene, POM, polyether ether ketone, PEEK, polytetrafluoroethylene, PTFE, or other materials suitable for use with food and/or pharmaceuticals.

In one or more example embodiments, the stabilisation device is arranged at the intermediate portion, such as the stabilisation device is configured to be arranged at the intermediate portion. For example, the stabilisation device may be seen as configured to be arranged in the intermediate portion. It may be appreciated that the intermediate portion may be seen as the at least one groove where the stabilisation device is to be arranged.

In one or more example embodiments, the stabilisation device has a substantially rectangular cross section and is configured to be arranged at an intermediate portion of the expansion device. The rectangular cross section may be seen from a plane perpendicular to the longitudinal direction. By having a rectangular cross section, the stabilisation device may be configured to abut one or more side sections of one or more ridges when the expansion device is compressed and/or moving. In one or more example embodiments, the stabilisation device has a plurality of interconnected protrusions, such as two interconnected protrusions, where each protrusion is configured to be arranged in a groove of the expansion device. The plurality of interconnected protrusions may be seen as protrusions substantially matching the width and/or the depth of the grooves where the protrusions are to be arranged. In one or more example embodiments, the groove where a protrusion is to be arranged has a larger width than the protrusion, such as at least 1 mm larger. This may allow the expansion device to compress the bellow structure before abutting the stabilisation device. In one or more example embodiments, the stabilisation device has a substantially circular, semi-circular, or oval cross section.

In one or more example embodiments, the stabilisation device has at least one rounded edge configured to abut a rounding of the at least one groove. For example, the stabilisation device may have at least one rounded edge configured to abut a trough section, such as a rounding of a trough section. In other words, the stabilisation device may have at least one rounded edge towards a bottom part of the stabilisation device, e.g., an edge towards a bottom surface of the stabilisation device facing an upper surface of the expansion device, such as an upper surface of the intermediate portion.

In one or more example embodiments, the stabilisation device has two rounded edges, such as at least two round edges, configured to abut the roundings on each side of the intermediate portion. For example, the stabilisation device may have at least two rounded edges configured to abut a trough section, such as a rounding of a trough section on each side of the intermediate portion. In other words, the stabilisation device may have at least one rounded edge towards a bottom part of the stabilisation device, e.g., an edge towards a bottom surface of the stabilisation device facing an upper surface of the expansion device, such as an upper surface of the intermediate portion. In other words, a radius of curvature of the two rounded edges, such as bottom edges of the stabilization device, may correspond to a radius of curvature of the intermediate portion, such as a radius of curvature of the trough sections on each side of the stabilisation device. This may allow to distribute the force across the stabilisation device and/or the side section and trough section of the expansion device, e.g., when the expansion device is compressed.

In one or more example embodiments, a height H_S of the stabilisation device is at least 2 mm more than a height H_R,1 of the first ridge. The height H_R,1 of the first ridge may be seen as a hight of the first bulb or first bellow, e.g., including a thickness of the plate. Having a height of the stabilisation device being at least 2 mm higher than the height of the first ridge may allow to provide support to the ridges, such as bulbs or bellows, when the expansion device is compressed and the height of the first ridge increases, such as increases slightly. It may be appreciated that when the expansion device is subject to forces, the first ridge may be compressed and the height of the first ridge may increase while the width of the first ridge may decrease. Therefore, the additional height of the stabilisation device may compensate for this increase in height of the first ridge. In other words, the additional height of the stabilisation device may stabilize the neighbouring ridges becoming higher when the expansion device is compressed.

It may be appreciated that the dimensions specified for the expansion device, such as the width W_R,1 of the first ridge, the width W_G,1 of the first groove, the depth D_R,1 of the first ridge etc. may be dimensions in a static state of the expansion device, such as a state where the expansion device is not in operation and/or not subjected to forces from pipeline.

In one or more example embodiments, the stabilisation device is positioned within 25%, such as comprising 25%, of the centre of the expansion device in the longitudinal direction. In other words, the stabilisation device may be positioned or arranged within a distance of 25% the length of the expansion device, such as a length of the first pipe portion and/or second pipe portion, from the centre of the expansion device in the longitudinal direction. In one or more example embodiments, there may be an equal number of ridges and grooves on each side of the stabilisation device. In one or more example embodiments, there may be 25% more ridges and/or grooves on one side of the stabilisation device.

In one or more example embodiments, a width of the intermediate portion is larger than a width of the stabilisation device. In one or more example embodiments, the intermediate portion where the stabilisation device is to be arranged has a larger width than the stabilisation device, such as at least 1 mm larger width. This may allow the expansion device to compress the bellow structure before abutting the stabilisation device. In other words, the larger width of the intermediate portion may allow for the bellow structure to compress a few mm around the stabilisation device.

In one or more example embodiments, the stabilisation device is a stabilisation ring surrounding the expansion device circumferentially. For example, the stabilisation device may be a ring in one or more portions or pieces to be mounted circumferentially around the expansion device. For example, the stabilisation device may be a stabilisation ring with a substantially rectangular cross section in a longitudinal direction.

In one or more example embodiments, the stabilisation device has a slit of at least 1 mm. For example, when the stabilisation device is a stabilisation ring, the slit may allow to spread the stabilisation device on each side of the slit in order to fit the stabilisation device around the expansion device.

In one or more example embodiments, the expansion device comprises a first end pipe portion at a first end of the first pipe portion and a second end pipe portion at a second end of the first pipe portion or at a second end of the second pipe portion. In other words, the expansion device may have a first end pipe portion and a second end pipe portion on opposite sides of the expansion device, e.g., without corrugated bellow structure, for connection with a pipeline portion on each side of the expansion device. The first end pipe portion and the second end pipe portion may be seen as connection portions to be connected to the pipeline or pipeline system.

In one or more example embodiments, a ratio of an inside diameter of the expansion device and a wall thickness is in a range of 50 to 300. In one or more example embodiments, a ratio between the inside diameter of the expansion device and a wall thickness of the expansion device may be in the range of 50 to 300, such as 60 to 250, and e.g., 80 to 200, or 25 to 300.

In one or more example embodiments, the expansion device has a wall thickness in a range of 0.2 mm to 3 mm, such as 0.2 mm to 2 mm, and e.g., 0.5 mm to 1.5 mm. In one or more example embodiments, the expansion device has a wall thickness of less than or equal to 1 mm. Having lower wall thickness than current expansion devices allow to increase the width of the ridges and/or reduce the distance between the ridges. The wall thickness may be seen as a total plate thickness of the expansion device, such as a total thickness of the material that the expansion device is made of. For example, the expansion device may be made from one or more plates, e.g., each having a thickness in the range of 0.2 mm to 3 mm. The expansion device may for example be made of two plates of 0.3 mm plate thickness for a DN50 expansion device, e.g., having a wall thickness of 0.6 mm. Examples, of wall thicknesses are provided in table 1. The wall thickness may be dependent on the size of the expansion device. The expansion device may be formed from any suitable material for an expansion device, such as any metal and/or alloy. For example, the expansion device may be formed from plates or sheets of steel, such as stainless steel, titanium, and/or any other stainless material.

In one or more example embodiments, the expansion device has a shroud covering the first pipe portion and/or the stabilisation device. The shroud may be for protecting the corrugated bellow structure and/or for securing the stabilisation device. In one or more example embodiments, the shroud may be mounted to the expansion device on one or more support rings of the expansion device. For example, the shroud may be fixedly mounted on one end of the expansion device and mounted with one or more degrees of freedom on another end of the expansion device, e.g., for allowing movement of the shroud when the expansion device is subject to forces in operation. The shroud may be covering the expansion device circumferentially. In one or more example embodiments, there may be a distance of at least 1 mm between the crest of the first ridge and/or a top point of the stabilisation device and the shroud, e.g., for allowing expansion and/or compression of the expansion device.

A method of manufacturing an expansion device is disclosed. The method comprises providing one or more sheets of suitable material. When more than one sheet is used, the sheets may be welded together, such as welded together while placing the welds away from each other. The method comprises performing a bellow forming operation of the one or more sheets using a first secondary inside matrix and a second secondary outside matrix. The bellow forming operation may comprise a punching and/or rolling operation of the one or more sheets. The bellow forming operation may comprise an after rolling operation, e.g., after the punching.

A ratio between a diameter of the first secondary inside matrix and a diameter of the second secondary outside matrix is at least 1.1, such as in the range of 1.1 to 4. In other words, by having a ratio of a diameter between the first secondary inside matrix and a diameter of the second secondary outside matrix of at least 1.1, such as in the range of 1.1 to 4, the present method may provide an expansion device having a ratio between a width W_R,1 of a first ridge and a width W_G,1 of a first groove of at least 1.1. The first secondary inside matrix may be seen as a matrix for forming the ridges of the expansion device, e.g., being on an inside of the expansion device, and the second secondary outside matrix may be seen as a matrix for forming the grooves of the expansion device, e.g., being on an outside of the expansion device. It may be appreciated that for forming a ridge, such as one bulb or bellow, the second secondary outside matrix may comprise at least two matrixes or matrix parts and the first secondary matrix may comprise at least one matrix or matrix part. A matrix may also be denoted a die or comprising one or more dies. For forming one ridge, such as one bulb or bellow, the one or more sheets may be punched by one matrix on the inside from the first secondary inside matrix against or towards the outside matrix comprising two matrixes from the second secondary outside matrix. In other words, the outside matrix, such as the second secondary outside matrix, may be seen as a mold against which the one or more sheets are pushed and/or punched for forming the bellows.

In one or more example embodiments, the method comprising performing an initial bellow forming operation of the one or more sheets using a first primary inside matrix and a second primary outside matrix. The initial bellow forming operation may be performed before the bellow forming operation. The initial bellow forming operation may be performed by a rubber punch machine or any other punch machine. By performing an initial bellow forming operation before the bellow forming operation followed by the bellow forming operation may allow to release mechanical stress in the one or more sheets. It may be appreciated that when an initial bellow forming operation is performed, the bellow forming operation may comprise a roll forming operation, such as an after rolling operation. In one or more example embodiments, the bellow forming operation may comprise a punching operation and/or a roll forming operation, such as a bellow rolling operation after the punching. In other words, for some embodiments, the initial bellow forming operation and the bellow forming operation may be performed in go, e.g., the bellow forming operation comprises the initial bellow forming operation. It may be appreciated that when an initial bellow forming operation is performed, the roll forming operation may be a roll forming operation, such as an after rolling operation of the bellow structure.

In one or more example embodiments, a diameter of the first primary inside matrix is larger than a diameter of the second primary outside matrix in the range of 0 mm to 1.5 mm, such as 0.1 mm to 1.5 mm larger. In one or more example embodiments, a diameter of the first primary inside matrix is larger than a diameter of the second primary outside matrix in the range of 0.5 mm to 1.5 mm, such as 0.5 mm to 1.2 mm.

Below Table 1 shows example dimensions for an expansion device according to the present disclosure.

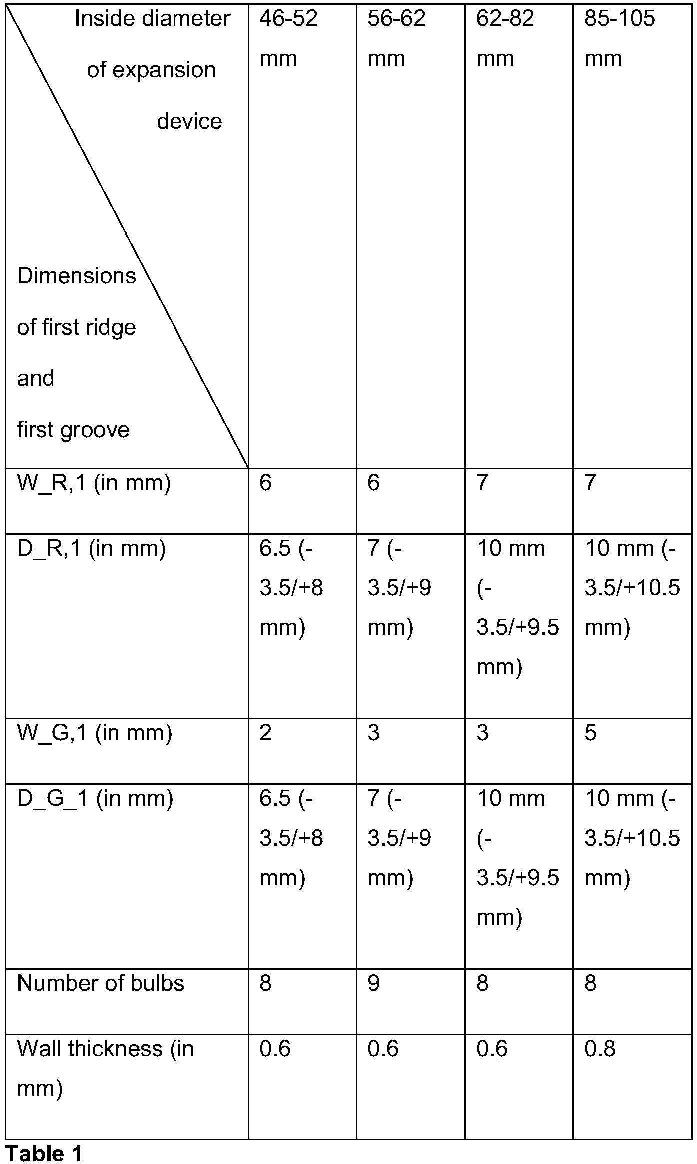

The inside diameter of the expansion device in the top row of table 1 may be seen respectively as dimensions corresponding or substantially corresponding to a DN50, a DN65, a DN80, and a DN100 expansion device. The present technique and expansion device may also apply to smaller and larger dimensions of expansion devices, such as DN150, DN200, DN250, DN300, DN400, and/or DN500. It may be appreciated that the number of bulbs may be a number of bulbs per pipe portion of the expansion device. For example, the first pipe portion and the second pipe portion may each comprise 8 bulbs. In the examples of table 1 the expansion devices may be formed from two layers or sheets and the wall thickness may indicate a total thickness of the layers or sheets. The expansion devices could be formed from one layer or sheet or more than two layers or sheets. The examples of table 1 are merely examples of dimensions for expansion devices according to the present disclosure. It may be appreciated that any combination of dimensions falling into the ranges and/or ratios described in the present disclosure may be envisaged.

A stabilisation device for an expansion device is disclosed. The stabilisation device has a substantially rectangular cross section and is configured to be arranged at an intermediate portion of the expansion device and/or the stabilisation device has a plurality of interconnected protrusions where each protrusion is configured to be arranged in a groove of the expansion device. It may be appreciated that the present stabilisation device may be used for other expansion devices than the presently disclosed expansion device, e.g., for retro fitting of the stabilisation device.

In one or more example embodiments, the stabilisation device comprises a slit of at least 1 mm.

A method of retrofitting a stabilisation device according to the present disclosure to an expansion device is disclosed. The method comprises arranging the stabilisation device in at least one groove of the expansion device. In one or more example embodiments, the method comprises arranging the stabilisation device in an intermediate portion of the expansion device.

A kit of parts is disclosed. The kit comprises an expansion device according to the present disclosure and a stabilisation device according to the present disclosure.

It is to be understood that a description of a feature in relation to the expansion device is also applicable to the corresponding feature in the method(s) of manufacturing an expansion device as disclosed herein, the method of retro fitting a stabilisation device as disclosed herein, a kit of parts as disclosed herein, and/or to the corresponding feature of the stabilisation device as disclosed herein and vice versa.

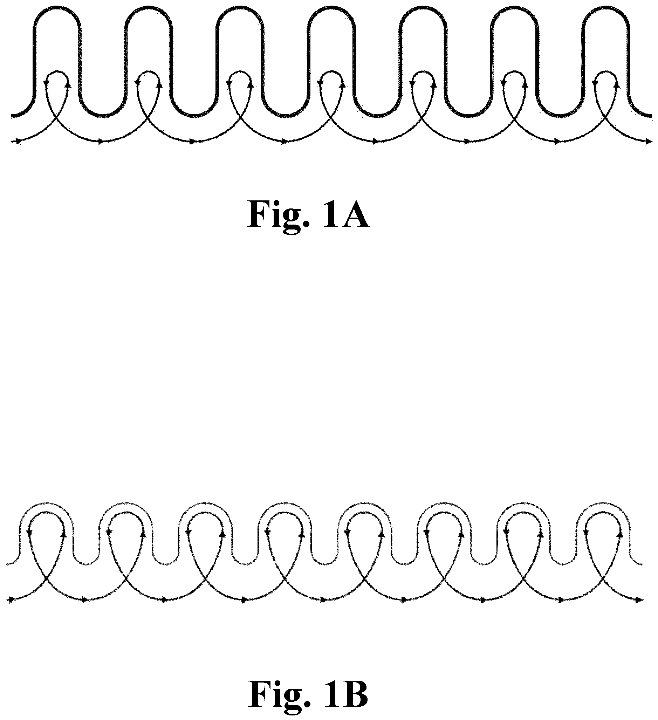

Fig. 1A schematically illustrates an example of a currently known expansion device. Fig. 1A shows a cross sectional view in a longitudinal direction of the expansion device. As may be seen with the illustration of the flow with the arrows, the flow of medium entering the ridges of this expansion device does not entirely flush the ridges. Therefore, the waves, such as corrugated bellow structure of this type of expansion device, create pockets, such as cylindrical pockets, that can trap residues of the medium flowing through the expansion device, which in turn creates the potential for impurities, such as accumulation of impurities, in the piping system.

During regular operation, a piping system is cleaned periodically by flushing with water or another cleaning fluid. However, in the current bellow designs, flushing does not provide sufficient cleanliness, as the cleaning fluid cannot effectively clear the pockets of trapped residues. Therefore, current expansion devices have to be unmounted from the pipeline system and cleaned manually.

Fig. 1B schematically illustrates an example cross-section view of an example expansion device according to the present disclosure. As may be seen with the illustration of the flow with the arrows, in the expansion device according to the present disclosure having the first ridge wider than the first groove allows the medium flowing in the expansion device, such as in the internal passage, to enter the first ridge, such as the plurality of ridges, and create a turbulence in the first ridge which in turn allows self-cleaning of the first ridge, such as self-cleaning of the expansion device. Also, it is observed that the medium may enter the entire ridge instead of only part of a ridge as it is the case in current expansion devices as shown in Fig. 1A. The present expansion device improves the maintenance and cleaning of the expansion device by allowing cleaning product to enter the entire first ridge of the expansion device instead of only part of a ridge in current expansion devices.

Fig. 2 schematically illustrates an example zoomed-in cross-section view of an example expansion device according to the present disclosure, such as a part of an expansion device.

The expansion device 10 comprises a first pipe portion PP_1 with a corrugated bellow structure having a plurality of ridges including a first ridge R_1 and a plurality of grooves including a first groove G_1. In one or more example embodiments, the expansion device 10 may comprise a number N of ridges and a number N-1 of grooves. The expansion device 10 of Fig. 2 comprises three ridges and two grooves. The first pipe portion PP_1 comprises a second ridge R_2, a third ridge R_3, and a second groove G_2. It may be appreciated that each ridge has a least one neighbouring groove.

The expansion device 10 comprises an internal passage IP (also illustrated in Fig. 3, Figs. 4A-4B, Fig. 5, and Fig. 6) in a longitudinal direction L of the expansion device 10. The internal passage IP may be configured to allow a medium flowing in the pipeline to flow through the expansion device 10. The expansion device 10 may have a substantially circular cross section in a direction perpendicular to the longitudinal direction L. The longitudinal direction L may be seen as a direction being along a length of the expansion device 10, such as the direction in which the expansion device 10 has its longest dimension. It may be appreciated that in use of the expansion device 10 the medium may flow along the longitudinal direction L in the internal passage IP of the expansion device 10.

An inner surface IS_R of the plurality of ridges is on an inside of the expansion device 10 and an inner surface IS_G of the plurality of grooves is on an outside of the expansion device 10. In other words, the inner surface IS_R of the plurality of ridges may be seen as on an inside of the expansion device 10, such as facing the internal passage IP of the expansion device 10. The inner surface IS_G of the grooves may be seen as on an outside of the expansion device 10, such as facing away from the internal passage IP. In other words, in use of the expansion device 10 the inner surface IS_R of the plurality of ridges may be in contact with the medium flowing in the internal passage IP, while the inner surface IS_G of the plurality of grooves may not be in contact with the medium.

A ratio between a width W_R,1 of the first ridge R_1 and a width W_G,1 of the first groove G_1 is at least 1.1. For example, the ratio between the width W_R,1 of the first ridge R_1 and a width W_G,1 of the first groove G_1 is at least 2.5, such as 3. A first secondary inside matrix used for the first ridge R_1 may be 6 mm and a second primary outside matrix used for the first groove G_1 may be 2 mm. A ration between the second ridge R_2 and the second groove G_2 and a ration between the third ridge R_3 and the second groove G_2 is the same as between the first ridge R_1 and the first groove G_1, namely at least 1.1. For example, for each of the three ridges, a ratio between a ridge and a groove may be at least 1.1. In one or more example embodiments, all of or substantially all of the ridges and grooves of the first pipe portion PP_1 may have a ridge/groove width ratio of at least 1.1.

The width W_R,1 of the first ridge R_1 may be measured at a widest point of the first ridge R_1 as shown in Fig. 2. The width W_G,1 of the first groove G_1 may be measured at a widest point of the first groove G_1 as shown in Fig. 2 The width W_R,1 of the first ridge R_1 may be measured at a widest point between a first side section SS_1 and a second side section SS_2 as disclosed herein.

The first ridge R_1 has a first crest section CS_1 comprising a first crest C_1 where the first crest section CS_1 has a rounded shape, such as a substantially rounded shape. The first crest section CS_1 may be seen as the section of the first ridge R_1 which is curving on each side of the crest C_1. A dotted line delimits where the first crest section CS_1 stops and where the first side section SS_1 and the second side section SS_2 start. The crest C_1 may be seen as a top point of the first ridge R_1. The first crest section CS_1 may be seen as having an arched, oval, and/or semi-circular cross section in a direction perpendicular to the longitudinal direction L. In one or more example embodiments, each of the plurality of ridges of the first pipe portion PP_1 has a crest section comprising a crest where the crest section has a rounded shape.

In one or more example embodiments, a ratio between the width W_R,1 and a depth D_R,1 of the first ridge R_1 is in the range of 0.5 to 1.2. A ratio between the width W_R,1 and a depth D_R,1 of the first ridge R_1 is in the range of 0.5 to 1.2 provides ridges having a reduced depth but a wider width compared to ridges in current expansion devices which are narrower and more elongated, e.g., having a width to depth ratio <0.5.

In one or more example embodiments, the first groove G_1 has a first trough section TS_1 comprising a first trough T_1 where the first trough section TS_1 has a rounded shape. The first trough section TS_1 may be seen as the section of the first groove G_1 which is curving on each side of the trough. The trough T_1 may be seen as a top point of the first groove G_1. The first trough section TS_1 may be seen as having an arched, oval, and/or semi-circular cross section in a direction perpendicular to the longitudinal direction L. In one or more example embodiments, each of the plurality of grooves of the first pipe portion PP_1 has a trough section comprising a trough where the trough section has a rounded shape.

In one or more example embodiments, a ratio between a radius of curvature of the first crest section CS_1 and a radius of curvature of the first trough section TS_ 1 is at least 1.1. In one or more example embodiments, the ratio between the radius of curvature of the first crest section CS_1 and the radius of curvature of the first trough section TS_1 is at least 1.2, at least 1.3, at least 1.4, at least 1.5, at least 2, at least 2.5, or at least 3, for example 4. In other words, the ratio between the radius of curvature of the first crest section CS_1 and the radius of curvature of the first trough section TS_1 may be in the range of 1.1 to 4, such as 1.4 to 4, e.g., 1.4 to 3.

In one or more example embodiments, the first ridge R_1 has a first side section SS_1 and a second side section SS_2 where the first crest section CS_1 interconnects the first side section SS_1 and the second side section SS_2. In one or more example embodiments, the first side section SS_1 and/or the second side section SS_2 form an angle with the longitudinal direction L in the range of 75° to 105°, such as in the range of 85° to 95°. The first side section SS_1 and the second side section SS_2 may be seen as side walls of the first ridge R_1. In other words, the first ridge may be seen as having substantially straight walls, such as substantially perpendicular walls. The first side section SS_1 may be seen as the section between the first crest section CS_1 and the previous neighbouring groove's trough section. The second side section SS_2 may be seen as the section between the first crest section CS_1 and the next neighbouring groove's trough section, such as the first trough section TS_1. It may be appreciated that the first side section SS_1 and the second side section SS_2 of the first ridge R_1 may be seen as side sections of the previous neighbouring groove and/or the next neighbouring groove.

Fig. 3 schematically illustrates an example cross-section view of an example expansion device according to the present disclosure. Fig. 3 shows an example expansion device 10, such as the expansion device 10 shown in Fig. 2. An example first ridge 3 according to the present disclosure is shown on Fig. 3. It may be appreciated that the description of Fig. 2 may also apply to the expansion device of Fig. 3 and vice versa.

In one or more example embodiments, the expansion device 10 comprises a second pipe portion PP_2 with a corrugated bellow structure having a plurality of ridges and a plurality of grooves. In one or more example embodiments, the second pipe portion PP_2 is similar or identical to the first pipe portion PP_1. For example, the expansion device 10 may be symmetrical around an intermediate portion 12 where the first pipe portion PP_1 and second pipe portion PP_2 are substantially identical on each side of the intermediate portion 12.

In one or more example embodiments, the expansion device 10 comprising an intermediate portion 12 between the first pipe portion PP_1 and the second pipe portion PP_2. In other words, the first pipe portion PP_1 and the second pipe portion PP_2 may be separated by the intermediate portion 12. The intermediate portion 12 may be seen as a pipe portion without corrugated bellow structure. The first pipe portion PP_1 and the second pipe portion PP_2 may be formed from a common pipe portion. The intermediate portion 12 may be formed by refraining from forming bulbs and/or bellow structure at the intermediate portion 12, such as refraining from performing a bellow forming operation and/or a punching operation at the intermediate portion 12. In one or more example embodiments, the intermediate portion 12 may be seen as a groove between the first pipe portion PP_1 and the second pipe portion PP_2, such as a groove between the last ridge of the first pipe portion PP_1 and the first ridges of the second pipe portion PP_2. The intermediate portion 12 may be seen as a separation portion between the first pipe portion PP_1 and the second pipe portion PP_2, such as a separation portion along an outer surface of the expansion device 10 surrounding the expansion device 10.

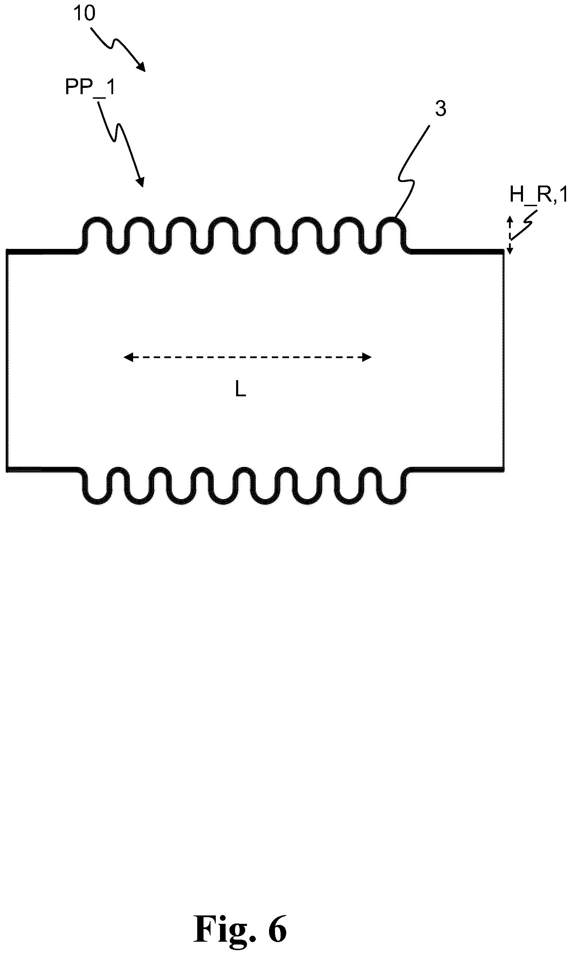

In one or more example embodiments, the expansion device 10 comprises a stabilisation device 2 arranged in at least one groove of the plurality of grooves. The stabilisation device 2 may be seen as a device for stabilizing the expansion device, such as for increasing a stability of the expansion device 10 and improving a durability or lifetime of the expansion device 10. It may be appreciated that having a ratio between a width W_R,1 of the first ridge and a width W_G,1 of the first groove of at least 1.1 may decrease a bulb or bellow stability of the expansion device 10. Therefore, in order to compensate for this instability due to the different width between the first ridge R_1 and the first groove G_1 and/or to increase the durability or lifetime of the expansion device 10, a stabilisation device, such as stabilisation device 2, may be arranged in at least one groove of the plurality of grooves. It should be noted that the expansion device 10 may work without the stabilisation device 2 even with an introduced instability from the difference of width between the first ridge R_1 and the first groove G_1 as may be seen on Fig. 6. The stabilisation device 2 may provide an increased rigidity in the region where the stabilisation device 2 is arranged and may compensate for the forces and/or pressure that the expansion device 10 and the bellows may be subject to under operation of the expansion device 10. The stabilisation device 2 may avoid that the bellow structure collapses, such as one or more ridges and/or grooves collapsing, due to large forces and/or pressure on the expansion device 10. The stabilisation device 2 may be configured to stabilize the expansion device 10 when the expansion device 10 is subject to forces and/or pressure and is compressed and/or moving.

In one or more example embodiments, the stabilisation device 2 is arranged at the intermediate portion 12, such as the stabilisation device 2 is configured to be arranged at the intermediate portion 12. For example, the stabilisation device 2 may be seen as configured to be arranged in the intermediate portion 12. It may be appreciated that the intermediate portion 12 may be seen as the at least one groove where the stabilisation device 2 is to be arranged.

In one or more example embodiments, the stabilisation device 2 has a substantially rectangular cross section and is configured to be arranged at the intermediate portion 12 of the expansion device 10 as may be seen in Fig. 3. By having a rectangular cross section, the stabilisation device 2 may be configured to abut one or more side sections of one or more ridges when the expansion device 10 is compressed and/or moving.

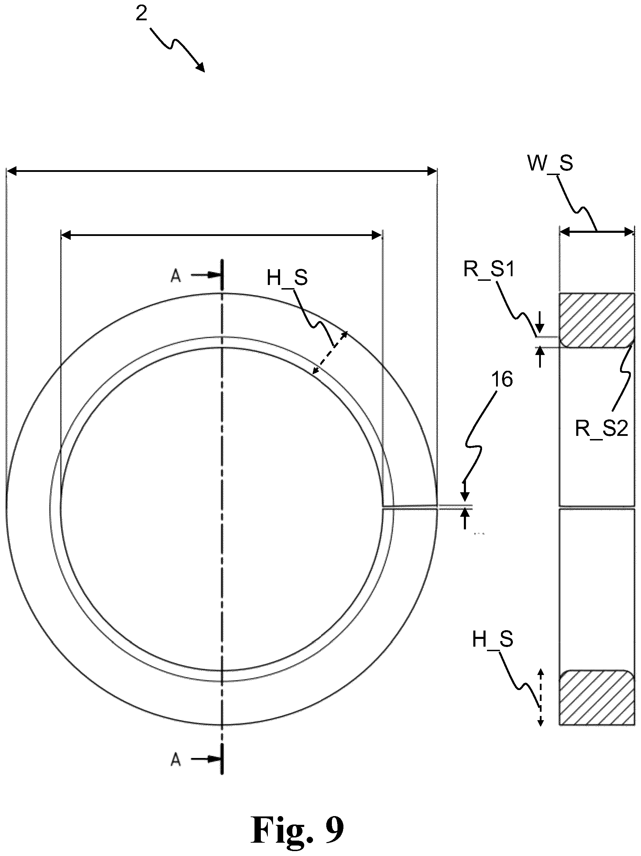

In one or more example embodiments, the stabilisation device 2 has at least one rounded edge configured to abut a rounding of the at least one groove. This is also shown in Fig. 4A and Fig. 9. For example, the stabilisation device 2 may have at least one rounded edge configured to abut a trough section, such as a rounding of a trough section. In other words, the stabilisation device 2 may have at least one rounded edge towards a bottom part of the stabilisation device 2, e.g., an edge towards a bottom surface of the stabilisation device 2 facing an upper surface of the expansion device 10, such as an upper surface of the intermediate portion 12.

In one or more example embodiments, the stabilisation device 2 has two rounded edges, such as at least two round edges, configured to abut the roundings on each side of the intermediate portion. This is also shown in Fig. 4A and Fig. 9. For example, the stabilisation device 2 may have at least two rounded edges configured to abut a trough section, such as a rounding of a trough section on each side of the intermediate portion 12. In other words, the stabilisation device 2 may have at least one rounded edge towards a bottom part of the stabilisation device 2, e.g., an edge towards a bottom surface of the stabilisation device 2 facing an upper surface of the expansion device 10, such as an upper surface of the intermediate portion 12. In other words, a radius of curvature of the two rounded edges, such as bottom edges of the stabilization device 2, may correspond to a radius of curvature of the intermediate portion 12, such as a radius of curvature of the trough sections on each side of the stabilisation device 2. This may allow to distribute the force across the stabilisation device 2 and/or the side section and trough section of the expansion device 10, e.g., when the expansion device is compressed.

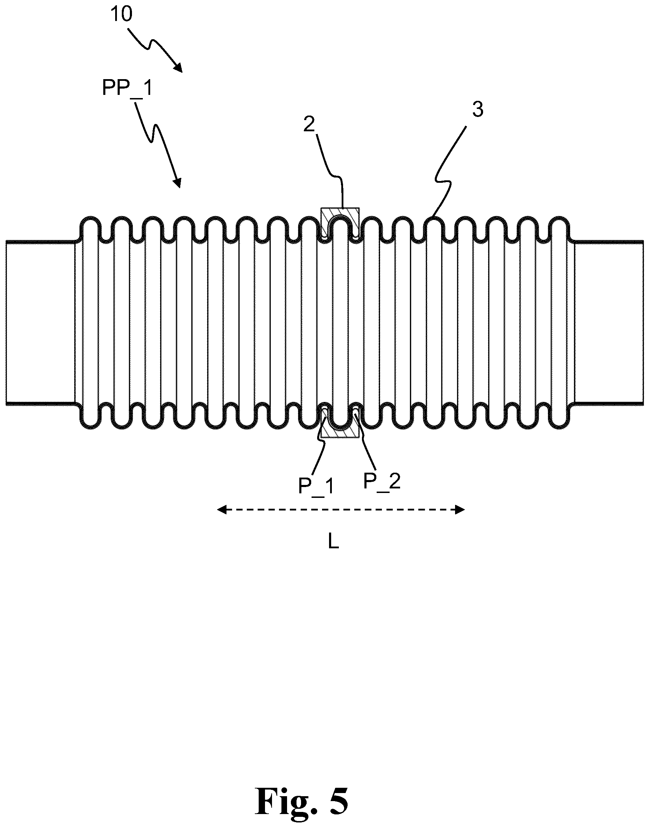

In one or more example embodiments, the stabilisation device 2 is positioned within 25%, such as comprising 25%, of the centre of the expansion device 10 in the longitudinal direction L. In other words, the stabilisation device 2 may be positioned or arranged within a distance of 25% the length of the expansion device 10, such as a length of the first pipe portion PP_1 and/or second pipe portion PP_2, from the centre of the expansion device 10 in the longitudinal direction L. In one or more example embodiments, there may be an equal number of ridges and grooves on each side of the stabilisation device 2, such as shown in Fig. 3 and Fig. 4A. In one or more example embodiments, there may be 25% more ridges and/or grooves on one side of the stabilisation device. For example, in Fig. 5 the number of ridges is larger on one side of the stabilisation device 2 than on the other side.

In one or more example embodiments, the expansion device 10 has a shroud 4 covering the first pipe portion PP_1 and/or the stabilisation device 2. The shroud 4 may be for protecting the corrugated bellow structure and/or for securing the stabilisation device 2. In one or more example embodiments, the shroud 4 may be for stabilizing the expansion device 10 further. In one or more example embodiments, the shroud 4 may be mounted to the expansion device 10 on one or more support rings 5 of the expansion device 10. The one or more support rings may be made of polyoxymethylene, POM, polyether ether ketone, PEEK, polytetrafluoroethylene, PTFE, or other materials suitable for use with food and/or pharmaceuticals. For example, the shroud 4 may be fixedly mounted on one support ring 5 on one end of the expansion device 10 and mounted with one or more degrees of freedom on another support ring on another end of the expansion device 10 (e.g., the opposite end of the support ring 5), e.g., for allowing movement of the shroud 4 when the expansion device 10 is subject to forces and/or pressure in operation. The shroud 4 may be covering the expansion device 10 circumferentially. In one or more example embodiments, there may be a distance of at least 1 mm between the crest of the first ridge and/or a top point of the stabilisation device 2 and the shroud 4 (not visible on Fig. 3), e.g., for allowing expansion and/or compression of the expansion device 10.

In one or more example embodiments, the expansion device 10 comprises one or more pipe portions 1 attached, such as welded, at each end of the expansion device 10. The one or more pipe portions 1 may be used for extending the end pipe portions of the expansion device 10, e.g., for facilitating connection of the expansion device 10 to certain pipelines. The one or more pipe portions 1 may be attached to the first end pipe portion and/or the second end pipe portion as disclosed herein.

In one or more example embodiments, the expansion device 10 comprises attachments means 6 for attaching the shroud 4 to the one or more support rings 5.

Fig. 4A schematically illustrates an example cross-section view of an example expansion device according to the present disclosure. Fig. 4A shows an example expansion device 10, such as the expansion device 10 shown in Fig. 2 and Fig. 3. An example first ridge 3 according to the present disclosure is shown on Fig. 4A. It may be appreciated that the description of Fig. 2 and Fig. 3 may also apply to the expansion device of Fig. 4A and vice versa.

In one or more example embodiments, a ratio between an inside diameter 5 of the expansion device 10 and the depth D_R,1 of the first ridge (as shown in Fig. 2) is in the range of 5 to 12. In one or more example embodiments, a ratio between an inside diameter 5 of the expansion device 10 and the depth D_R,1 of the first ridge is in the range of 6 to 11, such as in the range of 7 to 10. It may be appreciated that the depth of the first ridge, such as the depth of the ridges of the expansion device, may be proportional with the inside diameter of the expansion device.

In one or more example embodiments, the intermediate portion 12 has a cylindrical cross section along the longitudinal direction L. In other words, the intermediate portion may be seen as having a circular cross section in a direction perpendicular to the longitudinal direction L. Seen from a cross section along a longitudinal direction L as shown in Fig. 2 and Figs. 4A-4B, the intermediate portion 12 has a straight portion between the first pipe portion PP_1 and the second pipe portion PP_2. For example, seen from this cross section the intermediate portion 12 may be seen as a groove having a flat or plane bottom portion or section.

In one or more example embodiments, a height H_S (as shown in Fig. 9) of the stabilisation device 2 is at least 2 mm more than a height H_R,1 of the first ridge (as shown in Fig. 6). The height H_R,1 of the first ridge may be seen as a hight of the first bulb or first bellow, e.g., including a thickness of the plate. Having a height of the stabilisation device 2 being at least 2 mm higher than the height of the first ridge may allow to provide support to the ridges, such as bulbs or bellows, when the expansion device 10 is compressed and the height of the first ridge increases, such as increases slightly. It may be appreciated that when the expansion device 10 is subject to forces and/or pressure, the first ridge may be compressed and the height of the first ridge may increase while the width of the first ridge may decrease. Therefore, the additional height of the stabilisation device 2 may compensate for this increase in height of the first ridge. In other words, the additional height of the stabilisation device may stabilize the neighbouring ridges becoming higher when the expansion device 10 is compressed.

In one or more example embodiments, a width 8 of the intermediate portion 12 is larger than a width of the stabilisation device 2. In one or more example embodiments, the intermediate portion 12 where the stabilisation device 2 is to be arranged has a larger width 8 than the stabilisation device 2, such as at least 1 mm larger width. This may allow the expansion device 10 to compress the bellow structure before abutting the stabilisation device 2. In other words, the larger width 8 of the intermediate portion 12 may allow for the bellow structure to compress a few mm around the stabilisation device 2.

In one or more example embodiments, the expansion device 10 comprises a first end pipe portion EPP_1 at a first end of the first pipe portion PP_1 and a second end pipe portion EPP_2 at a second end of the first pipe portion PP_1 or at a second end of the second pipe portion PP_2. In other words, the expansion device 10 may have a first end pipe portion EPP_1 and a second end pipe portion EPP_2 on opposite sides of the expansion device 10, e.g., without corrugated bellow structure, for connection with a pipeline portion on each side of the expansion device 10. The first end pipe portion EPP_1 and the second end pipe portion EPP_2 may be seen as connection portions to be connected to the pipeline or pipeline system.

Fig. 4B schematically illustrates an example cross-section view of an example expansion device according to the present disclosure. Fig. 4B shows an example expansion device 10, such as the expansion device 10 shown in Fig. 2, Fig. 3, and Fig. 4A but without stabilisation device. An example first ridge 3 according to the present disclosure is shown on Fig. 4B. It may be appreciated that the description of Fig. 2, Fig. 3, and Fig. 4A may also apply to the expansion device of Fig. 4B and vice versa.

Fig. 5 schematically illustrates an example cross-section view of an example expansion device according to the present disclosure. Fig. 5 shows an example expansion device 10, such as the expansion device 10 shown in Fig. 2, Fig. 3, and Fig. 4A but with a different stabilisation device as the stabilisation device shown in Fig. 3 and Fig. 4A. An example first ridge 3 according to the present disclosure is shown on Fig. 5. It may be appreciated that the description of Fig. 2, Fig. 3, and Fig. 4A may also apply to the expansion device of Fig. 5 and vice versa.

In one or more example embodiments, the stabilisation device 2 may be arranged in at least two grooves of the plurality of grooves as shown in Fig. 5.

In one or more example embodiments, the stabilisation device 2 has a plurality of interconnected protrusions, such as two interconnected protrusions comprising a first protrusion P_1 and a second protrusion P_2, where each protrusion is configured to be arranged in a groove of the expansion device 10. The plurality of interconnected protrusions may be seen as protrusions substantially matching the width and/or the depth of the grooves where the protrusions are to be arranged.

In one or more example embodiments, the groove where a protrusion is to be arranged has a larger width than the protrusion, such as at least 1 mm larger. This may allow the expansion device to compress the bellow structure before abutting the stabilisation device 2.

Fig. 6 schematically illustrates an example cross-section view of an example expansion device according to the present disclosure. Fig. 6 shows an example expansion device 10, such as the expansion device 10 shown in Fig. 2, Fig. 3, Figs. 4A-4B, and Fig. 5 but without stabilisation device. An example first ridge 3 according to the present disclosure is shown on Fig. 6. It may be appreciated that the description of Fig. 2, Fig. 3, Figs. 4A-4B, and Fig. 5 may also apply to the expansion device of Fig. 6 and vice versa.

A method of manufacturing an expansion device is disclosed. The method comprises providing one or more sheets of suitable material. The method comprises performing a bellow forming operation of the one or more sheets using a first secondary inside matrix and a second secondary outside matrix, where a ratio of a diameter between the first secondary inside matrix and a radius of the second secondary outside matrix is at least 1.1.

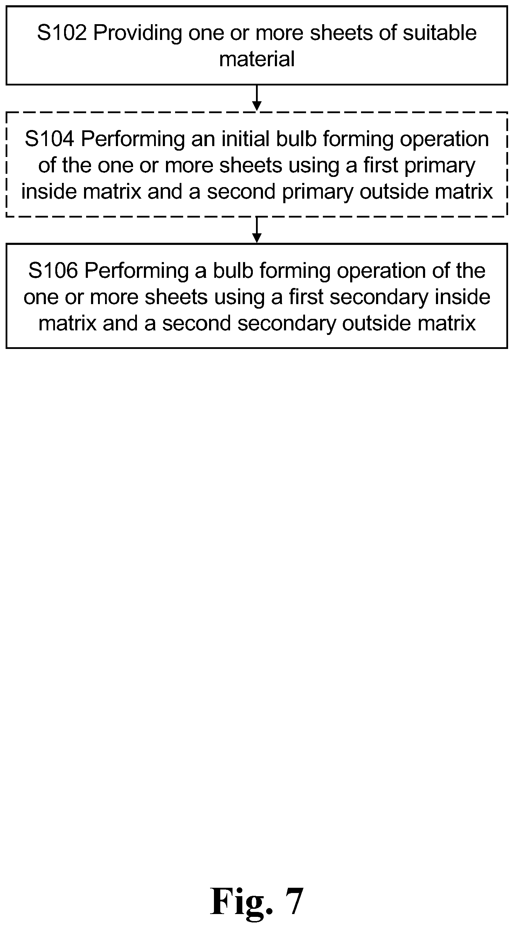

Fig. 7 show a flow diagram of an example method of manufacturing an expansion device according to the present disclosure.

A method 100 of manufacturing an expansion device is disclosed. The method 100 comprises providing S102 one or more sheets of suitable material. When more than one sheet is used, the sheets may be welded together, such as welded together while placing the welds away from each other. The method 100 comprises performing S106 a bellow forming operation, such as a second bellow forming operation, of the one or more sheets using a first secondary inside matrix and a second secondary outside matrix. The bellow forming operation may comprise a punching and/or rolling operation of the one or more sheets. The bellow forming operation may comprise an after rolling operation, e.g., after the punching.

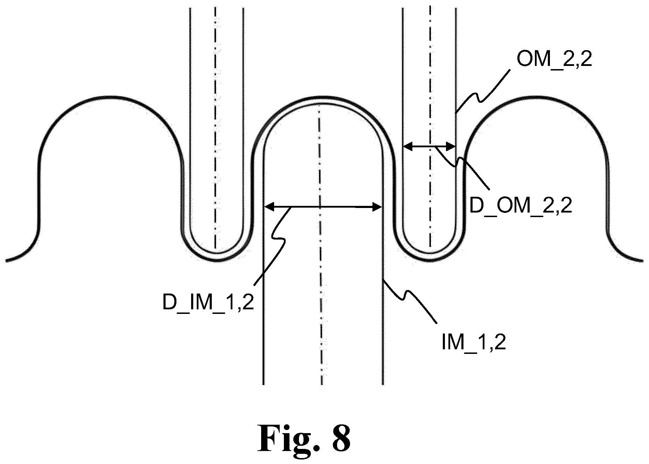

A ratio between a diameter D_IM_1 ,2 of the first secondary inside matrix IM_1,2 and a diameter D_OM_2,2 of the second secondary outside matrix OM_2,2 is at least 1.1, such as in the range of 1.1 to 4 as shown in Fig. 8. In other words, by having a ratio of a diameter D_IM_1,2 between the first secondary inside matrix IM_1,2 and a diameter D_OM_2,2 of the second secondary outside matrix OM_2,2 of at least 1.1, such as in the range of 1.1 to 4, the present method 100 may provide an expansion device having a ratio between a width W_R,1 of a first ridge and a width W_G,1 of a first groove of at least 1.1. In one or more example embodiments, the expansion devices as disclosed herein are manufactured with the method 100. such as at least partly with the method 100.

The first secondary inside matrix IM_1,2 may be seen as a matrix for forming the ridges of the expansion device, e.g., being on an inside of the expansion device, and the second secondary outside matrix OM_2,2 may be seen as a matrix for forming the grooves of the expansion device, e.g., being on an outside of the expansion device. It may be appreciated that for forming a ridge, such as one bulb or bellow, the second secondary outside matrix OM_2,2 may comprise at least two matrixes and the first secondary inside matrix IM_1,2 may comprise at least one matrix. For forming one ridge, such as one bulb or bellow, the one or more sheets may be punched by one matrix on the inside from the first secondary inside matrix IM_1,2. It may be appreciated that for punch operations, the punching may be performed just from the inside, e.g., with the first secondary inside matrix IM_1,2, and not punched from the outside. On the other hand, when performing rubber punching operations, both inside and outside matrixes may be used, such as the first secondary inside matrix IM_1,2 and the second secondary outside matrix OM_2,2. In the example of Fig. 8, for forming one ridge, such as one bulb or bellow, the one or more sheets may be punched from the inside towards two outside matrixes, e.g., comprising the second secondary outside matrix OM_2,2. It may be appreciated that the second secondary outside matrix OM_2,2 comprises two matrixes or dies.

In one or more example embodiments, the method 100 comprising performing S104 an initial bellow forming operation of the one or more sheets using a first primary inside matrix and a second primary outside matrix (not shown in Fig. 8). The initial bellow forming operation may be performed before the bellow forming operation. The initial bellow forming operation may be performed by a rubber punch machine or any other punch machine. By performing an initial bellow forming operation before the bellow forming operation followed by the bellow forming operation may allow to release mechanical stress in the one or more sheets.

In one or more example embodiments, a diameter of the first primary inside matrix is larger than a diameter of the second primary outside matrix in the range of 0 mm to 1.5 mm, such as 0.1 mm to 1.5 mm larger. In one or more example embodiments, a diameter of the first primary inside matrix is larger than a diameter of the second primary outside matrix in the range of 0.5 mm to 1.5 mm, such as 0.5 mm to 1.2 mm.

Fig. 8 schematically illustrates an example cross-section view where a technique as disclosed herein is applied, such as where the method 100 of manufacturing an expansion device is applied. Fig. 8 shows a bellow forming operation, such as a second bellow forming operation, of the one or more sheets using a first secondary inside matrix and a second secondary outside matrix. The bellow forming operation may comprise a punching and/or rolling operation of the one or more sheets. The bellow forming operation may comprise an after rolling operation, e.g., after the punching.

A ratio between a diameter D_IM_1 ,2 of the first secondary inside matrix IM_1,2 and a diameter D_OM_2,2 of the second secondary outside matrix OM_2,2 is at least 1.1, such as in the range of 1.1 to 4 as shown in Fig. 8.

The first secondary inside matrix IM_1,2 may be seen as a matrix for forming the ridges of the expansion device, e.g., being on an inside of the expansion device, and the second secondary outside matrix OM_2,2 may be seen as a matrix for forming the grooves of the expansion device, e.g., being on an outside of the expansion device. It may be appreciated that for forming a ridge, such as one bulb or bellow, the second secondary outside matrix OM_2,2 may comprise at least two matrixes and the first secondary inside matrix IM_1,2 may comprise at least one matrix. For forming one ridge, such as one bulb or bellow, the one or more sheets may be punched by one matrix on the inside from the first secondary inside matrix IM_1,2 and punched from the outside by two matrixes from the second secondary outside matrix OM_2,2.

Fig. 9 schematically illustrates an example side view and an example cross-section view of an example stabilisation device according to the present disclosure.

A stabilisation device 2 for an expansion device is disclosed. In one or more example embodiments, the stabilisation device 2 has a substantially rectangular cross section as shown in Fig. 9 and is configured to be arranged at an intermediate portion of the expansion device. In one or more example embodiments, the stabilisation device has a plurality of interconnected protrusions where each protrusion is configured to be arranged in a groove of the expansion device (as shown in the embodiment of stabilisation device in Fig. 5). It may be appreciated that the present stabilisation device may be used for other expansion devices than the presently disclosed expansion device, e.g., for retro fitting of the stabilisation device.

In one or more example embodiments, the stabilisation device 2 comprises a slit 16 of at least 1 mm.

In one or more example embodiments, the stabilisation device 2 has at least one rounded edge R_S1 configured to abut a rounding of at least one groove of an expansion device. For example, the stabilisation device 2 may have at least one rounded edge configured to abut a trough section, such as a rounding of a trough section. In other words, the stabilisation device 2 may have at least one rounded edge R_S1 towards a bottom part of the stabilisation device 2, e.g., an edge towards a bottom surface of the stabilisation device 2 facing an upper surface of the expansion device, such as an upper surface of the intermediate portion.

In one or more example embodiments, the stabilisation device 2 has two rounded edges R_S1 and R_S2, such as at least two round edges, configured to abut the roundings on each side of the intermediate portion. For example, the stabilisation device 2 may have at least two rounded edges R_S1 and R_S2 configured to abut a trough section, such as a rounding of a trough section on each side of the intermediate portion. In other words, the stabilisation device may have at least one rounded edge towards a bottom part of the stabilisation device, e.g., an edge towards a bottom surface of the stabilisation device facing an upper surface of the expansion device, such as an upper surface of the intermediate portion. In other words, a radius of curvature of the two rounded edges R_S1 and R_S2, such as bottom edges of the stabilization device, may correspond to a radius of curvature of the intermediate portion, such as a radius of curvature of the trough sections on each side of the stabilisation device. This may allow to distribute the force across the stabilisation device and/or the side section and trough section of the expansion device, e.g., when the expansion device is compressed.

In one or more example embodiments, the stabilisation device 2 may have four rounded edges, such as at least four rounded edges. In other words, the top edges of the stabilisation device 2 may also be slightly rounded in order to avoid possible damage of the expansion device, such as possible damage of the bulbs abutting the stabilisation device.

In one or more example embodiments, a height H_S of the stabilisation device 2 is at least 2 mm more than a height H_R,1 of the first ridge. Having a height of the stabilisation device 2 being at least 2 mm higher than the height of the first ridge may allow to provide support to the ridges, such as bulbs or bellows, when the expansion device is compressed and the height of the first ridge increases, such as increases slightly. It may be appreciated that when the expansion device is subject to forces, the first ridge may be compressed and the height of the first ridge may increase while the width of the first ridge may decrease. Therefore, the additional height of the stabilisation device may compensate for this increase in height of the first ridge. In other words, the additional height of the stabilisation device may stabilize the neighbouring ridges becoming higher when the expansion device is compressed.

Examples of expansion devices, stabilisation devices, kit of parts, and methods according to the disclosure are set out in the following items:
Item 1. An expansion device for a pipeline, wherein the expansion device comprises a first pipe portion with a corrugated bellow structure having a plurality of ridges including a first ridge and a plurality of grooves including a first groove, the expansion device comprising an internal passage in a longitudinal direction of the expansion device, wherein an inner surface of the plurality of ridges is on an inside of the expansion device and an inner surface of the plurality of grooves is on an outside of the expansion device, wherein a ratio between a width (W_R,1) of the first ridge and a width (W_G,1) of the first groove is at least 1.1, and wherein the first ridge has a first crest section comprising a first crest where the first crest section has a rounded shape.
Item 2. The expansion device according to item 1, wherein a ratio between the width (W_R,1) and a depth (D_R,1) of the first ridge is in the range of 0.5 to 1.2.
Item 3. The expansion device according to any of the previous items, wherein the first groove has a first trough section comprising a first trough where the first trough section has a rounded shape, and wherein a ratio between a radius of curvature of the first crest section and a radius of curvature of the first trough section is at least 1.1.
Item 4. The expansion device according to any of the previous items, wherein the first ridge has a first side section and a second side section where the first crest section interconnects the first side section and the second side section, wherein the first side section and the second side section form an angle with the longitudinal direction in the range of 75° to 105°, such as in the range of 85° to 95°.
Item 5. The expansion device according to any of the previous items, wherein a ratio between an inside diameter of the expansion device and the depth (D_R,1) of the first ridge is in the range of 5 to 12.
Item 6. The expansion device according to any of the previous items, wherein the expansion device comprises a second pipe portion with a corrugated bellow structure having a plurality of ridges and a plurality of grooves, and the expansion device comprising an intermediate portion between the first pipe portion and the second pipe portion.
Item 7. The expansion device according to item 6, wherein the intermediate portion has a cylindrical cross section along the longitudinal direction.
Item 8. The expansion device according to any of the previous items, wherein the expansion device comprises a stabilisation device arranged in at least one groove of the plurality of grooves.
Item 9. The expansion device according to item 8 as dependent on any of items 6-7, wherein the stabilisation device is arranged at the intermediate portion.
Item 10. The expansion device according to any of items 8-9, wherein the stabilisation device has at least one rounded edge configured to abut a rounding of the at least one groove.
Item 11. The expansion device according to item 10 as dependent on any of items 6-7, wherein the stabilisation device has two rounded edges configured to abut the roundings on each side of the intermediate portion.
Item 12. The expansion device according to any of the previous items, wherein a height of the stabilisation device is at least 2 mm more than a height of the first ridge.
Item 13. The expansion device according to any of items 8 to 12, wherein the stabilisation device is positioned within 25% of the centre of the expansion device in the longitudinal direction.
Item 14. The expansion device according to any of items 8 to 13, wherein a width of the intermediate portion is larger than a width of the stabilisation device.
Item 15. The expansion device according to any of items 8 to 14, wherein the stabilisation device is a stabilisation ring surrounding the expansion device circumferentially.
Item 16. The expansion device according to any of the previous items, wherein the expansion device comprises a first end pipe portion at a first end of the first pipe portion and a second end pipe portion at a second end of the first pipe portion or at a second end of the second pipe portion.
Item 17. The expansion device according to any of the previous items, wherein a ratio of an inside diameter of the expansion device and a wall thickness is in a range of 50 to 300.
Item 18. The expansion device according to any of the previous items, wherein the expansion device has a shroud covering the first pipe portion and the stabilisation device.
Item 19. Method (100) of manufacturing an expansion device, the method comprising:
   - providing (S102) one or more sheets of suitable material;
   - and
   - performing (S106) a bellow forming operation of the one or more sheets using a first secondary inside matrix and a second secondary outside matrix, wherein a ratio between a diameter of the first secondary inside matrix and a diameter of the second secondary outside matrix is at least 1.1.
Item 20. The method according to item 19, the method comprising performing (S104) an initial bellow forming operation of the one or more sheets using a first primary inside matrix and a second primary outside matrix, wherein a diameter of the first primary inside matrix is larger than a diameter of the second primary outside matrix in the range of 0 mm to 1.5 mm.
Item 21. A stabilisation device for an expansion device, wherein the stabilisation device has a substantially rectangular cross section and is configured to be arranged at an intermediate portion of the expansion device, or wherein the stabilisation device has a plurality of interconnected protrusions where each protrusion is configured to be arranged in a groove of the expansion device,
Item 22. The stabilisation device according to item 21, wherein the stabilisation device comprises a slit of at least 1 mm.
Item 23. Method of retro-fitting a stabilisation device according to any of items 21 to 22 to an expansion device, the method comprising:
   - arranging the stabilisation device in at least one groove of the expansion device.
Item 24. A kit of parts comprising an expansion device according to any of items 1-18 and a stabilisation device according to any of items 21-22.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that the figures comprise some circuitries or operations which are illustrated with a solid line and some circuitries, components, features, or operations which are illustrated with a dashed line. Circuitries or operations which are comprised in a solid line are circuitries, components, features or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of', "characterizing", and/or "defining". The terms "indicative of", "associated with", "related to", "descriptive of", "characterizing", and "defining" can be used interchangeably. The term "indicative of" can be seen as indicating a relation. For example, weight data indicative of weight may comprise one or more weight parameters.

It is to be noted that the word "based on" may be seen as "as a function of" and/or "derived from". The terms "based on" and "as a function of" can be used interchangeably. For example, a parameter determined "based on" a data set can be seen as a parameter determined "as a function of" the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the examples may be implemented at least in part by means of both hardware and software, and that several "means", "units" or "devices" may be represented by the same item of hardware.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. An expansion device for a pipeline, wherein the expansion device comprises a first pipe portion with a corrugated bellow structure having a plurality of ridges including a first ridge and a plurality of grooves including a first groove, the expansion device comprising an internal passage in a longitudinal direction of the expansion device, wherein an inner surface of the plurality of ridges is on an inside of the expansion device and an inner surface of the plurality of grooves is on an outside of the expansion device, wherein a ratio between a width (W_R,1) of the first ridge and a width (W_G,1) of the first groove is at least 1.1, and wherein the first ridge has a first crest section comprising a first crest where the first crest section has a rounded shape.

2. The expansion device according to claim 1, wherein a ratio between the width (W_R,1) and a depth (D_R,1) of the first ridge is in the range of 0.5 to 1.2.

3. The expansion device according to any of the previous claims, wherein the first groove has a first trough section comprising a first trough where the first trough section has a rounded shape, and wherein a ratio between a radius of curvature of the first crest section and a radius of curvature of the first trough section is at least 1.1.

4. The expansion device according to any of the previous claims, wherein the first ridge has a first side section and a second side section where the first crest section interconnects the first side section and the second side section, wherein the first side section and the second side section form an angle with the longitudinal direction in the range of 75° to 105°, such as in the range of 85° to 95°.

5. The expansion device according to any of the previous claims, wherein a ratio between an inside diameter of the expansion device and the depth (D_R,1) of the first ridge is in the range of 5 to 12.

6. The expansion device according to any of the previous claims, wherein the expansion device comprises a second pipe portion with a corrugated bellow structure having a plurality of ridges and a plurality of grooves, and the expansion device comprising an intermediate portion between the first pipe portion and the second pipe portion.

7. The expansion device according to claim 6, wherein the intermediate portion has a cylindrical cross section along the longitudinal direction.

8. The expansion device according to any of the previous claims, wherein the expansion device comprises a stabilisation device arranged in at least one groove of the plurality of grooves.

9. The expansion device according to claim 8 as dependent on any of claims 6-7, wherein the stabilisation device is arranged at the intermediate portion.

10. The expansion device according to any of claims 8-9, wherein the stabilisation device has at least one rounded edge configured to abut a rounding of the at least one groove.

11. The expansion device according to claim 10 as dependent on any of claims 6-7, wherein the stabilisation device has two rounded edges configured to abut the roundings on each side of the intermediate portion.

12. The expansion device according to any of the previous claims, wherein a height of the stabilisation device is at least 2 mm more than a height of the first ridge.

13. The expansion device according to any of claims 8 to 12, wherein the stabilisation device is positioned within 25% of the centre of the expansion device in the longitudinal direction.

14. The expansion device according to any of claims 8 to 13, wherein a width of the intermediate portion is larger than a width of the stabilisation device.

15. The expansion device according to any of claims 8 to 14, wherein the stabilisation device is a stabilisation ring surrounding the expansion device circumferentially.

16. The expansion device according to any of the previous claims, wherein a ratio of an inside diameter of the expansion device and a wall thickness is in a range of 50 to 300.

17. Method (100) of manufacturing an expansion device, the method comprising:
- providing (S102) one or more sheets of suitable material;
- and
- performing (S106) a bellow forming operation of the one or more sheets using a first secondary inside matrix and a second secondary outside matrix, wherein a ratio between a diameter of the first secondary inside matrix and a diameter of the second secondary outside matrix is at least 1.1.

18. The method according to claim 19, the method comprising performing (S104) an initial bellow forming operation of the one or more sheets using a first primary inside matrix and a second primary outside matrix, wherein a diameter of the first primary inside matrix is larger than a diameter of the second primary outside matrix in the range of 0 mm to 1.5 mm.
